(19)

Europäisches
Patentamt
European
Patent Office
Office européen
des brevets

(11) **EP 3 561 018 A1**

(12) **EUROPEAN PATENT APPLICATION**
published in accordance with Art. 153(4) EPC

(43) Date of publication:
**30.10.2019 Bulletin 2019/44**

(21) Application number: **17883278.8**

(22) Date of filing: **21.12.2017**

(51) Int Cl.:
*C09J 133/00* (2006.01)   *C09J 7/00* (2018.01)
*C09J 7/20* (2018.01)   *C09J 167/02* (2006.01)

(86) International application number:
**PCT/JP2017/045860**

(87) International publication number:
**WO 2018/117205 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2016   JP 2016248836**

(71) Applicant: **Mitsubishi Chemical Corporation
Tokyo 1008251 (JP)**

(72) Inventors:
• **KAWAZOE, Yuta
Osaka-shi
Osaka 530-0018 (JP)**
• **SAKAI, Junichiro
Osaka-shi
Osaka 530-0018 (JP)**

(74) Representative: **Kuhnen & Wacker
Patent- und Rechtsanwaltsbüro PartG mbB
Prinz-Ludwig-Straße 40A
85354 Freising (DE)**

(54) **ADHESIVE COMPOSITION, ADHESIVE, AND ADHESIVE TAPE**

(57)   An adhesive composition is provided, which is excellent in moist heat resistance and adhesion to a plastic sheet containing a plasticizer or similar ingredient, particularly to a vinyl chloride resin sheet. The adhesive composition contains: (A) an acrylic resin; and (B) a polyester resin (B) having a glass transition temperature of not higher than 50°C and a number-average molecular weight of 10,000 to 50,000.

EP 3 561 018 A1

**Description**

TECHNICAL FIELD

The present disclosure relates to an adhesive composition containing an acrylic resin and a polyester resin and, more specifically, to an adhesive composition that is excellent in adhesion and, particularly, is free from deterioration of adhesion that may otherwise occur when a plasticizer or a like formulation ingredient migrates from an adherend or a base such as made of a vinyl chloride resin to the adhesive composition over time. The adhesive composition has excellent adhesion even under high-temperature and high-humidity conditions. The present disclosure also relates to an adhesive and an adhesive tape produced by using the adhesive composition.

BACKGROUND ART

Conventionally, acrylic adhesive compositions are often used as adhesive compositions.

Such an acrylic adhesive composition is excellent in adhesion to an adherend not containing a metal, a plasticizer and the like, but is liable to deteriorate in adhesion to a plastic sheet containing a greater amount of a specific formulation ingredient, e.g., to a plastic sheet such as made of a vinyl chloride resin containing a greater amount of a plasticizer, because the formulation ingredient such as the plasticizer is liable to migrate to the adhesive composition over time. That is, the acrylic adhesive composition is liable to deteriorate in adhesion to an adherend or a base made of the vinyl chloride resin over time, and to have difficulty in maintaining its adhesion when being exposed to high-temperature and high-humidity conditions.

To cope with this problem, a pressure-sensitive adhesive is proposed, which exhibits excellent adhesion even when being used with an adherend of a vinyl chloride resin in a high-temperature environment. PTL 1, for example, states that a pressure-sensitive adhesive that contains an adhesive polymer having a specific (meth)acrylic acid ester monomer, a (meth) acrylic acid monomer, and a monomer having a nitrogen atom and a vinyl group as monomer units, and hydrophobic silica fine particles exhibits excellent adhesion against various external forces to be exerted thereon in a wide variety of environments.

RELATED ART DOCUMENT

PATENT DOCUMENT

PTL 1: JP-A-2016-164229

SUMMARY

However, the adhesive disclosed in PTL 1 requires further improvement in adhesion to the adherend of vinyl chloride resin and improvement for prevention of the deterioration of adhesive strength in a high-temperature and high-humidity environment.

In view of the foregoing, the present disclosure provides an adhesive composition, an adhesive, and an adhesive tape, which are excellent in adhesion to a plastic sheet containing a plasticizer or a like formulation ingredient, particularly to a vinyl chloride resin sheet, and are also excellent in moist heat resistance.

In view of the foregoing, the inventors conducted intensive studies and, as a result, found that an adhesive composition prepared by blending an acrylic resin and a polyester resin having a lower glass transition temperature and a number-average molecular weight within a specific range is excellent in adhesion, particularly in adhesion to a vinyl chloride resin containing a plasticizer, and is also excellent in moist heat resistance.

According to a first aspect of the present disclosure, there is provided an adhesive composition, which contains: (A) an acrylic resin; and (B) a polyester resin having a glass transition temperature of not higher than 50°C and a number-average molecular weight of 10,000 to 50,000.

According to a second aspect of the present disclosure, there is provided an adhesive prepared by curing the adhesive composition described above. According to a third aspect of the present disclosure, there is provided an adhesive tape that includes an adhesive layer made of the adhesive described above.

The adhesive composition of the present disclosure contains the acrylic resin (A), and the polyester resin (B) having a glass transition temperature of not higher than 50°C and a number-average molecular weight of 10, 000 to 50, 000 and, therefore, the resulting adhesive is excellent in adhesion, particularly in adhesion to vinyl chloride resin, and is also excellent in moist heat resistance.

Where the weight ratio (A/B) between the acrylic resin (A) and the polyester resin (B) is 99/1 to 70/30, the resulting adhesive is further improved in adhesion.

Where the adhesive composition further contains a crosslinking agent (C), the resulting adhesive is excellent in shear resistance.

The adhesive prepared by curing the adhesive composition is excellent in moist heat resistance.

The adhesive tape including the adhesive layer of the adhesive is excellent in adhesion, particularly in adhesion to vinyl chloride resin, and is also excellent in moist heat resistance.

Where the adhesive tape has a layered structure including an adhesive layer (I), a substrate, and an adhesive layer (II) stacked in this order and at least one of the adhesive layer (I) and the adhesive layer (II) is made of the adhesive described above, the adhesive tape allows for more flexible design.

DESCRIPTION OF EMBODIMENTS

Specific embodiments of the present disclosure will be described. However, it should be understood that the present disclosure is not limited to these embodiments.

In the present disclosure, "(meth)acryl" means acryl or methacryl, " (meth) acryloyl" means acryloyl or methacryloyl, and "(meth)acrylate" means acrylate or methacrylate.

The adhesive composition of the present disclosure contains: (A) an acrylic resin; and (B) a polyester resin having a glass transition temperature of not higher than 50°C and a number-average molecular weight of 10,000 to 50,000. The ingredients of the adhesive composition of the present disclosure will hereinafter be described.

<Acrylic Resin (A)>

The acrylic resin (A) is typically prepared by polymerizing an alkyl (meth)acrylate monomer (a1) as a main component and, as required, copolymerizing the alkyl (meth)acrylate monomer (a1), a functional group-containing monomer (a2) and some other copolymerizable monomer (a3) as comonomer components.

Here, the main component means a component that significantly influences the properties of the acrylic resin (A), and is preferably present in a proportion of not less than 50 wt.%, particularly preferably not less than 70 wt.%.

The alkyl (meth)acrylate monomer (a1) contains an alkyl group typically having a carbon number of 1 to 20, particularly preferably 1 to 12, more preferably 1 to 8, especially preferably 4 to 8. Specific examples of the alkyl (meth)acrylate monomer (a1) include methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, iso-octyl acrylate, isodecyl (meth)acrylate, lauryl (meth)acrylate, cetyl (meth)acrylate, stearyl (meth)acrylate, and iso-stearyl acrylate, which may be used alone or in combination.

Of these alkyl (meth)acrylate monomers (a1), n-butyl (meth)acrylate and 2-ethylhexyl (meth)acrylate are preferably used from the viewpoint of copolymerizability, adhesion, handling ease, and availability of ingredients.

The proportion of the alkyl (meth)acrylate monomer (a1) in the comonomer components is at least 10 wt.% or more, preferably 10 to 100 wt.%, particularly preferably 50 to 95 wt.%, more preferably 70 to 95 wt. %. If the proportion of the alkyl (meth)acrylate monomer (a1) is excessively small, the adhesive composition tends to have a reduced adhesive strength when being used as an adhesive.

The functional group-containing monomer (a2) may be a monomer containing a functional group, other than the component (a1). Examples of the functional group-containing monomer (a2) include hydroxyl group-containing monomers, carboxyl group-containing monomers, amino group-containing monomers, acetoacetyl group-containing monomers, isocyanate group-containing monomers, and glycidyl group-containing monomers, among which the hydroxyl group-containing monomers and the carboxyl group-containing monomers are preferably used for an efficient crosslinking reaction.

Examples of the hydroxyl group-containing monomers include: hydroxyalkyl (meth)acrylates such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate; caprolactone-modified monomers such as caprolactone-modified 2-hydroxyethyl (meth)acrylate; oxyalkylene-modified monomers such as diethylene glycol (meth)acrylate and polyethylene glycol (meth)acrylate; monomers containing a primary hydroxyl group, such as 2-(meth)acryloyloxyethyl 2-hydroxyethyl phthalate; monomers containing a secondary hydroxyl group, such as 2-hydroxypropyl (meth)acrylate, 2-hydroxybutyl (meth)acrylate, and 3-chloro-2-hydroxypropyl (meth)acrylate; and monomers containing a tertiary hydroxyl group, such as 2,2-dimethyl-2-hydroxyethyl (meth)acrylate.

Of these, 2-hydroxyethyl (meth)acrylate and 4-hydroxybutyl (meth)acrylate are particularly preferably used because of their excellent reactivity with a crosslinking agent.

Examples of the carboxyl group-containing monomers include (meth) acrylic acid, acrylic acid dimer, crotonic acid, maleic acid, maleic anhydride, fumaric acid, citraconic acid, glutaconic acid, itaconic acid, acrylamido-N-glycolic acid, and cinnamic acid, among which (meth) acrylic acid is preferably used.

Examples of the amino group-containing monomers include tert-butylaminoethyl (meth)acrylate, ethylaminoethyl (meth)acrylate, dimethylaminoethyl (meth)acrylate, and diethylaminoethyl (meth)acrylate.

Examples of the acetoacetyl group-containing monomers include 2-(acetoacetoxy)ethyl (meth)acrylate and allyl acetoacetate.

Examples of the isocyanate group-containing monomers include 2-acryloyloxyethyl isocyanate and 2-methacryloyloxyethyl isocyanate, and alkylene oxide adducts of these isocyanates.

Examples of the glycidyl group-containing monomers include glycidyl (meth)acrylate and allylglycidyl (meth)acrylate.

These functional group-containing monomers (a2) may be used alone or in combination.

The proportion of the functional group-containing monomer (a2) in the comonomer components is preferably 0.01 to 30 wt.%, particularly preferably 0.05 to 10 wt.%, more preferably 0.1 to 10 wt.%, especially preferably 2 to 5 wt.%. If the proportion of the functional group-containing monomer (a2) is excessively small, the adhesive composition tends to be poorer in durability because of its lower cohesive force. If the proportion of the functional group-containing monomer (a2) is excessively great, the adhesive composition tends to have a higher viscosity and poorer resin stability.

The other copolymerizable monomer (a3) may be a copolymerizable monomer other than the components (a1) and (a2) described above. Examples of the other copolymerizable monomer (a3) include: (meth)acrylate compounds containing an alicyclic structure, such as cyclohexyl (meth)acrylate and isobornyl (meth)acrylate; monomers containing a single aromatic ring, such as phenyl (meth)acrylate, benzyl (meth)acrylate, phenoxyethyl (meth)acrylate, phenyldiethylene glycol (meth)acrylate, 2-hydroxy-3-phenoxypropyl (meth)acrylate, styrene, and $\alpha$-methylstyrene; (meth) acrylic acid ester monomers containing a biphenyloxy structure, such as biphenyloxyethyl (meth)acrylate; (meth)acrylamide monomers such as ethoxymethyl(meth)acrylamide, n-butoxymethyl(meth)acrylamide, (meth)acryloylmorpholine, dimethyl(meth)acrylamide, diethyl(meth)acrylamide, (meth)acrylamide, and N-methylol(meth)acrylamide; monomers containing an alkoxy group or an oxyalkylene group, such as 2-methoxyethyl (meth)acrylate, 2-ethoxyethyl (meth)acrylate, methoxydiethylene glycol (meth)acrylate, ethoxydiethylene glycol (meth)acrylate, methoxypolyethylene glycol (meth)acrylate, and polypropylene glycol mono (meth) acrylate; and acrylonitrile, methacrylonitrile, vinyl acetate, vinyl propionate, vinyl stearate, vinyl chloride, vinylidene chloride, alkyl vinyl ethers, vinyltoluene, vinylpyridine, vinylpyrrolidone, dialkyl itaconates, dialkyl fumarates, allyl alcohol, acryl chloride, methyl vinyl ketone, allyltrimethylammonium chloride, and dimethylallyl vinyl ketone.

Of these, the (meth)acrylate compounds containing an alicyclic structure are preferred for excellent adhesive strength to a lower-polarity adherend.

The proportion of the other copolymerizable monomer (a3) in the comonomer components is preferably 0 to 40 wt.%, particular preferably 0 to 30 wt.%, more preferably 0 to 25 wt.%. If the proportion of the other copolymerizable monomer (a3) is excessively great, it will be difficult to provide desired adhesion.

The acrylic resin (A) is produced by polymerizing the alkyl (meth)acrylate monomer (a1), preferably the functional group-containing monomer (a2) and, as required, the other copolymerizable monomer (a3) as the comonomer components. A solution polymerization method is preferred for the polymerization, because the acrylic resin (A) can be safely and stably produced based on any desired monomer formulation. In the solution polymerization method, for example, the monomer components including the alkyl (meth)acrylate monomer (a1), the functional group-containing monomer (a2), and the other copolymerizable monomer (a3), and a polymerization initiator are mixed with or fed dropwise into an organic solvent, and the polymerization is allowed to proceed with refluxing at 50°C to 98°C for 1 to 20 hours.

Specific examples of the polymerization initiator include common radical polymerization initiators such as azo polymerization initiators including azobisisobutyronitrile and azobisdimethylvaleronitrile, and peroxide polymerization initiators including benzoyl peroxide, lauroyl peroxide, di-tert-butyl peroxide, and cumene hydroperoxide.

The weight-average molecular weight of the acrylic resin (A) is typically 100, 000 to 5, 000, 000, preferably 300, 000 to 1,500,000, particularly preferably 500,000 to 900,000. If the weight-average molecular weight is excessively low, poorer durability tends to result. If the weight-average molecular weight is excessively high, production of the acrylic resin (A) tends to be difficult.

The dispersity ratio (weight-average molecular weight/number-average molecular weight) of the acrylic resin (A) is preferably not higher than 20, particularly preferably not higher than 15, more preferably not higher than 10, especially preferably not higher than 7. If the dispersity ratio is excessively high, the resulting adhesive layer tends to be poorer in durability and to suffer from foaming or the like. The lower limit of the dispersity ratio is typically 1.1 in consideration of limitations in production.

The glass transition temperature of the acrylic resin (A) is preferably -80°C to 10°C, particularly preferably -70°C to -10°C, more preferably -65°C to -20°C. If the glass transition temperature is excessively high, insufficient tackiness tends to result. If the glass transition temperature is excessively low, a poorer heat resistance tends to result.

The weight-average molecular weight is based on standard polystyrene molecular weight, and is determined through measurement with high-performance liquid chromatography (Waters 2695 (apparatus main body) and Waters 2414 (detector) available from Nihon Waters K. K. ) with the use of three columns Shodex GPC KF-806L (each having an exclusion limit molecular weight of $2 \times 10^7$, a separation range of 100 to $2 \times 10^7$, a theoretical plate number of 10,000 per column, and filled with a column packing material of styrene-divinylbenzene copolymer having a particle diameter of 10 $\mu$m) connected in series. The number-average molecular weight may be determined by the same method. The dispersity ratio is calculated based on the weight-average molecular weight and the number-average molecular weight. The glass transition temperature is calculated from the following Fox equation:

$$\frac{1}{Tg} = \frac{Wa}{Tga} + \frac{Wb}{Tgb} + \cdots + \frac{Wn}{Tgn}$$

Tg: The glass transition temperature (K) of the copolymer
Tga: The glass transition temperature (K) of a homopolymer of a monomer A
Wa: The weight fraction of the monomer A
Tgb: The glass transition temperature (K) of a homopolymer of a monomer B
Wb: The weight fraction of the monomer B
Tgn: The glass transition temperature (K) of a homopolymer of a monomer N
Wn: The weight fraction of the monomer N

$$(Wa + Wb + \ldots + Wn = 1)$$

The glass transition temperatures of the homopolymers of the monomers of the acrylic resin (A) are typically measured by means of a differential scanning calorimeter (DSC).

<Polyester Resin (B)>

The adhesive composition of the present disclosure contains the polyester resin (B) having a glass transition temperature of not higher than 50°C and a number-average molecular weight of 10,000 to 50,000 (hereinafter referred to simply as "polyester resin (B)") in addition to the acrylic resin (A).

The polyester resin (B) is a saturated polyester resin prepared through esterification and polycondensation of a polymer component including a polycarboxylic acid component (B1) and a polyol component (B2).

In the present disclosure, the term "carboxylic acid" is intended to include carboxylic acid salts, carboxylic acid anhydrides, carboxylic acid halides, and carboxylic acid esters as well.

<Polycarboxylic Acid Component (B1)>

Examples of the polycarboxylic acid component (B1) to be used in the present disclosure include dicarboxylic acids including: aromatic dicarboxylic acids such as terephthalic acid, isophthalic acid, benzylmalonic acid, diphenic acid, 4,4'-oxydibenzoic acid, and naphthalene dicarboxylic acids; aliphatic dicarboxylic acids such as malonic acid, dimethylmalonic acid, succinic acid, glutaric acid, adipic acid, trimethyladipic acid, pimelic acid, 2,2-dimethylglutaric acid, azelaic acid, sebacic acid, fumaric acid, maleic acid, itaconic acid, thiodipropionic acid, and diglycolic acid; alicyclic dicarboxylic acids such as 1,3-cyclopentanedicarboxylic acid, 1,2-cyclohexanedicarboxylic acid, 1,4-cyclohexanedicarboxylic acid, 2,5-norbornanedicarboxylic acid, and adamantanedicarboxylic acid.

These may be used alone or in combination.

Of these, a mixture of an aromatic dicarboxylic acid and an aliphatic dicarboxylic acid is preferably used as the polycarboxylic acid component (B1), wherein isophthalic acid is preferred as the aromatic dicarboxylic acid, and sebacic acid or azelaic acid is preferred as the aliphatic dicarboxylic acid.

The formulation ratio (weight ratio) of the aliphatic dicarboxylic acid to the aromatic dicarboxylic acid (aliphatic dicarboxylic acid/aromatic dicarboxylic acid) is preferably 0.5 to 20, particularly preferably 1 to 10, more preferably 1.25 to 5, in order to impart the adhesive composition with the cohesive force.

The proportion of the aromatic dicarboxylic acid is preferably not greater than 50 mol %, particularly preferably 5 to 40 mol %, more preferably 10 to 30 mol %, based on the overall amount of the polycarboxylic acid component (B1). If the proportion of the aromatic dicarboxylic acid is excessively great, the polyester resin (B) tends to have a higher glass transition temperature, failing to provide sufficient adhesion.

In order to increase the number of branches in the polyester resin (B), a trivalent or higher-valent polycarboxylic acid may be used. Examples of the trivalent or higher-valent polycarboxylic acid include trimellitic acid, pyromellitic acid, adamantanetricarboxylic acid, and trimesic acid.

The proportion of the trivalent or higher-valent polycarboxylic acid is preferably not greater than 10 mol %, particularly preferably 0.1 to 5 mol %, based on the overall amount of the polycarboxylic acid component (B1) for a higher cohesive force of the adhesive. If the proportion of the trivalent or higher valent polycarboxylic acid is excessively great, gelation tends to result in the production of the polyester resin (B).

[Polyol Component (B2)]

Examples of the polyol component (B2) to be used in the present disclosure include diols including: aliphatic diols such as ethylene glycol, diethylene glycol, triethylene glycol, propylene glycol, dipropylene glycol, 1, 3-propanediol, 2, 4-dimethyl-2-ethylhexane-1,3-diol, 2-methyl-1,3-propanediol, 2,2-dimethyl-1,3-propanediol (neopentyl glycol), 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 3-methyl-1,5-pentanediol, and 2,2,4-trimethyl-1,6-hexanediol; alicyclic diols such as 1,2-cyclohexanedimethanol, 1,3-cyclohexanedimethanol, 1,4-cyclohexanedimethanol, spiroglycol, tricyclodecanedimethanol, adamantanediol, and 2,2,4,4-tetramethyl-1,3-cyclobutanediol; and aromatic diols such as 4,4'-thiodiphenol, 4,4'-methylenediphenol, 4,4'-dihydroxybiphenyl, o-, m- and p-dihydroxybenzenes, 2,5-naphthalenediol, and p-xylylenediol, and ethylene oxide adducts and propylene oxide adducts of these diols.
These may be used alone or in combination.
Of these, the diols such as the aliphatic diols and alicyclic diols are preferred because of their excellent reactivity. Particularly, ethylene glycol, 1,3-propanediol, 2-methyl-1,3-propanediol, neopentyl glycol, 1,4-butanediol, 1,5-pentanediol, and 1,6-hexanediol are preferred as the aliphatic diols, and 1,2-cyclohexanedimethanol, 1,3-cyclohexanedimethanol, and 1,4-cyclohexanedimethanol are preferred as the alicyclic diols.
In order to increase the number of branches in the polyester resin (B), a trivalent or higher-valent polyol may be used. Examples of the trivalent or higher-valent polyol include pentaerythritol, dipentaerythritol, tripentaerythritol, glycerin, trimethylolpropane, trimethylolethane, 1,3,6-hexanetriol, and adamantanetriol.
The proportion of the trivalent or higher-valent polyol is preferably not greater than 10 mol %, particularly preferably 0.1 to 5 mol %, based on the overall amount of the polyol component (B2). If the proportion of the trivalent or higher-valent polyol is excessively great, the production of the polyester resin (B) tends to be difficult.
The ratio of the polyol component (B2) to the polycarboxylic acid component (B1) is preferably 1 to 2 equivalents, particularly preferably 1.1 to 1.7 equivalents, based on 1 equivalent of the polycarboxylic acid component (Bl) . If the ratio of the polyol component (B2) is excessively low, the polyester resin (B) tends to have a higher acid value. This will make it difficult to increase the molecular weight of the polyester resin (B). If the ratio of the polyol component (B2) is excessively high, the yield of the polyester resin (B) tends to be reduced.
The polyester resin (B) to be used in the present disclosure is preferably prepared by blending the polycarboxylic acid component (B1) and the polyol component (B2) in given proportions, and allowing an esterification reaction and a polycondensation reaction to proceed by known methods. In the esterification reaction and the polycondensation reaction, a catalyst is preferably used as required. Particularly, the polycondensation reaction is preferably allowed to proceed in the presence of the catalyst. Where the catalyst is used, the catalyst is blended during the esterification reaction and/or during the polycondensation reaction. The catalyst blended for the esterification reaction may be used as it is for the polycondensation reaction without the use of another catalyst, or the same catalyst may be additionally blended for the polycondensation reaction.
The reaction temperature for the esterification reaction is preferably 160°C to 280°C, particularly preferably 180°C to 260°C, more preferably 200°C to 250°C. If the reaction temperature is excessively low, the reaction tends to insufficiently proceed. If the reaction temperature is excessively high, side reactions such as decomposition tend to occur. The pressure for the reaction is typically an ordinary pressure (1 atm).
After the esterification reaction, the polycondensation reaction is allowed to proceed in a reduced pressure atmosphere. For the polycondensation reaction, the catalyst is preferably used, and the reaction temperature is preferably 220°C to 280°C, more preferably 230°C to 270°C. For the reaction, the pressure in the reaction system is preferably gradually reduced, and preferably finally adjusted to not higher than 5 hPa. If the reaction temperature is excessively low, the reaction tends to insufficiently proceed. If the reaction temperature is excessively high, side reactions such as decomposition tend to occur.
Specific examples of the catalyst include: titanium-containing catalysts such as tetraisopropyl titanate and tetrabutyl titanate; antimony-containing catalysts such as antimony trioxide; germanium-containing catalysts such as germanium dioxide; and zinc acetate, manganese acetate, dibutyl tin oxide, and dibutyl tin dilaurate. These may be used alone or in combination. Of these, antimony trioxide, tetrabutyl titanate, germanium dioxide, and dibutyl tin dilaurate are preferred for balance between the activity of the catalyst and the hue, and dibutyl tin dilaurate is particularly preferred.
The proportion of the catalyst is preferably 1 to 10,000 ppm, particularly preferably 10 to 5,000 ppm, more preferably 10 to 3, 000 ppm, based on the overall amount of the polymer component. If the proportion of the catalyst is excessively small, the polycondensation reaction tends to insufficiently proceed. If the proportion of the catalyst is excessively great, side reactions tend to occur without advantages for a shorter reaction period and the like.

In the present disclosure, a polyester resin having no hydrocarbon group in its side chain is preferred as the polyester resin (B) for excellent adhesive strength after the adhesive composition is allowed to stand under high-temperature and high-humidity conditions.

The polyester resin (B) having no hydrocarbon group in its side chain may be prepared by using a polycarboxylic acid component having no hydrocarbon group in its side chain as the polycarboxylic acid component (B1) and using a polyol having no hydrocarbon group in its side chain as the polyol component (B2). Where the trivalent or higher-valent polyol component and/or the trivalent or higher-valent polycarboxylic acid component are used, these components preferably have no hydrocarbon group in their side chains.

The glass transition temperature of the polyester resin (B) should be not higher than 50°C. The glass transition temperature is preferably -80°C to 30°C, particularly preferably -70°C to 15°C, more preferably -60°C to 0°C. If the glass transition temperature is excessively high, the adhesive will have no flexibility and poorer initial adhesion, failing to exhibit a sufficient adhesive strength when being pressed with a pressure applied by a finger or the like. Further, the polyester resin having an excessively high glass transition temperature will be less compatible with the acrylic resin (A) to suffer from phase separation, resulting in a lower adhesive strength. If the glass transition temperature is excessively low, the adhesive tends to have a lower mechanical strength and a lower heat resistance.

The glass transition temperature (Tg) of the polyester resin (B) is measured by a differential scanning calorimeter DSC Q20 available from TA Instrument Company.

The number-average molecular weight of the polyester resin (B) to be used in the present disclosure should be 10, 000 to 50,000. The number-average molecular weight is preferably 15,000 to 40,000, particularly preferably 20,000 to 35,000.

If the number-average molecular weight is excessively low, the adhesive will fail to have a sufficient cohesive force, and tends to be poorer in heat resistance and mechanical strength. If the number-average molecular weight is excessively high, the adhesive will have no flexibility and poorer initial adhesion, failing to exhibit a sufficient adhesive strength when being pressed with a pressure applied by a finger or the like.

The number-average molecular weight is based on standard polystyrene molecular weight, and is determined through measurement with high-performance liquid chromatography (HLC-8320GPC available from Tosoh Corporation with the use of two columns TSKgel SUPERMULTIPORE HZ-M (each having an exclusion limit molecular weight of $2 \times 10^6$, a theoretical plate number of 16,000 per column, and filled with a column packing material of styrene-divinylbenzene copolymer having a particle diameter of 4 $\mu$m) connected in series. The glass transition temperature and the number-average molecular weight may be adjusted to desired levels by properly selecting a combination of monomers and polymerization conditions.

It is more preferred that the polyester resin (B) is not crystallized. Where the polyester resin (B) is crystallized, however, the crystallization energy of the polyester resin (B) is preferably as low as possible, and is typically not higher than 35 J/g, preferably not higher than 20 J/g, particularly preferably not higher than 15 J/g.

The weight ratio (A/B) of the acrylic resin (A) to the polyester resin (B) in the adhesive composition of the present disclosure is preferably 99/1 to 70/30, more preferably 95/5 to 75/25.

The proportion of the polyester resin (B) in the adhesive composition of the present disclosure is preferably 1 to 30 wt.%, particularly preferably 3 to 25 wt.%, more preferably 5 to 20 wt.%. If the proportion of the polyester resin (B) is excessively small, the adhesive tends to be poorer in adhesive strength. If the proportion of the polyester resin (B) is excessively great, the adhesive tends to be poorer in heat resistance.

The acrylic resin (A) and the polyester resin (B) are preferably crosslinked by a crosslinking agent (C) to be thereby cured.

<Crosslinking Agent (C)>

Examples of the crosslinking agent (C) include isocyanate crosslinking agents, metal chelate crosslinking agents, epoxy crosslinking agents, metal salt crosslinking agents, metal alkoxide crosslinking agents, aldehyde crosslinking agents, amino crosslinking agents of non-amino-resin type, urea crosslinking agents, melamine crosslinking agents, and aziridine crosslinking agents. Of these, the isocyanate crosslinking agents and the epoxy crosslinking agents are preferred.

The amount of the crosslinking agent (C) to be used is preferably 0.01 to 10 parts by weight, particularly preferably 0.01 to 5 parts by weight, based on 100 parts by weight of the acrylic resin (A). If the amount of the crosslinking agent (C) is excessively small, the adhesive composition tends to have a reduced cohesive force to be thereby less resistant to shear. If the amount of the crosslinking agent (C) is excessively great, the adhesive composition tends to have a reduced adhesive strength because of an excessive crosslinking reaction.

Where the crosslinking agent (C) is an isocyanate crosslinking agent, the amount of the isocyanate crosslinking agent is preferably 0.1 to 10 parts by weight, particularly preferably 0.2 to 5 parts by weight, based on 100 parts by weight of the acrylic resin (A). Where the crosslinking agent (C) is an epoxy crosslinking agent, the amount of the epoxy crosslinking agent is preferably 0.01 to 1 part by weight, particularly preferably 0.01 to 0.5 parts by weight, based on 100 parts by weight of the acrylic resin (A).

The adhesive composition of the present disclosure may contain the crosslinking agent (C), a tackifier, a UV absorbing agent, an antioxidant, a plasticizer, a pigment, a stabilizing agent, a filler, and the like in addition to the base resin including the acrylic resin (A) and the polyester resin (B).

Examples of the tackifier include rosin resins, terpene resins, xylene resins, phenol resins, coumarone resins, and petroleum resins. Where the base resin contains the acrylic resin, the rosin resins, the terpene resins, and the xylene resins are preferred as the tackifier. Where the base resin contains a rubber resin, the rosin resins, the terpene resins, and the petroleum resins are preferred as the tackifier.

The adhesive of the present disclosure is prepared by curing the adhesive composition prepared in the aforementioned manner. The adhesive can be advantageously used for an adhesive layer of the adhesive tape of the present disclosure.

<Adhesive Tape>

The adhesive tape of the present disclosure includes an adhesive layer formed from the adhesive prepared by curing the adhesive composition described above.

The adhesive layer preferably has a thickness of 5 to 200 μm, particularly preferably 10 to 150 μm, more preferably 15 to 130 μm.

If the thickness of the adhesive layer is excessively great, the tape tends to have a greater weight. If the thickness of the adhesive layer is excessively small, the adhesive layer tends to have an insufficient adhesive strength.

The adhesive layer preferably has a gel fraction of not higher than 90 wt.%, particularly preferably 1 to 90 wt.%.

If the gel fraction is higher than the preferable range, the adhesive strength tends to be reduced. If the gel fraction is lower than the preferable range, it will be difficult to provide a desired adhesive strength.

The gel fraction is an index of the crosslinking degree (curing degree), and is calculated, for example, by the following method. An adhesive tape that includes a polymer film (e.g., polyethylene terephthalate film or the like) serving as a substrate and an adhesive layer formed on the polymer film (provided with no release liner) is wrapped with a 200-mesh SUS (stainless steel) wire net, and immersed in toluene at 23°C for 48 hours. The weight percentage of an insoluble component of the adhesive remaining in the wire net with respect to the weight of the adhesive layer before the immersing is defined as the gel fraction. The weight of the substrate is preliminarily subtracted from the weight of the adhesive tape.

Where a SUS-BA plate (bright-annealed stainless steel plate) heat-dried at 175°C for 1 hour is used as a test plate of an adherend, for example, at least one surface of the adhesive layer preferably has an adhesive strength of 3 to 200 N/25 mm, particularly preferably 5 to 150 N/25 mm, more preferably 8 to 120 N/25 mm. Where a soft vinyl chloride resin sheet (TAKISTRON QA-983 available from Takiron Corporation) is used as an adherend, at least one surface of the adhesive layer preferably has an adhesive strength of 1 to 100 N/25 mm, particularly preferably 2 to 75 N/25 mm, more preferably 2.5 to 50 N/25 mm.

The adhesive strength of the adhesive layer varies depending on the formulation (material), the surface state (surface roughness), and the treatment (cleaning) conditions of the adherend and, therefore, is not limited to the aforementioned ranges.

If the adhesive strength of the adhesive layer is higher than the aforementioned ranges, it will be necessary to increase the thickness of the adhesive layer and, hence, the adhesive tape tends to have a greater weight. If the adhesive strength of the adhesive layer is excessively low, the adhesive tape will have an insufficient adhesive strength and, therefore, a part fixed by the adhesive tape is liable to be detached.

The adhesive strength of the adhesive layer is measured in conformity with JIS Z0237. More specifically, the adhesive strength is determined by a method described later in EXAMPLES.

Since a double-sided adhesive tape is used as a test strip, an adhesive surface of the tape not subjected to the test may be covered with a polyethylene terephthalate film (LUMIRROR S10 available from Toray Industries, Inc.) having a nominal thickness of No. 25 specified in JIS C2318 for the measurement as in EXAMPLES to be described later.

The adhesive tape of the present disclosure includes at least one adhesive layer, but preferably includes at least two adhesive layers. Further, the adhesive tape may include a substrate, or may be a so-called substrateless adhesive tape including a release liner or the like without the use of a substrate. More preferably, the adhesive tape is a substrate-based double-sided adhesive tape having a layered structure including an adhesive layer (I), a substrate, and an adhesive layer (II) stacked in this order, wherein at least one of the adhesive layer (I) and the adhesive layer (II) is an adhesive layer made of the adhesive of the present disclosure.

The adhesive layers of the double-sided adhesive tape may be of the same type, or may be of different types having different formulations. More preferably, the adhesive layers provided on opposite sides of the tape have different adhesive strengths and different formulations. This allows for flexible designs, e.g., a design such that an adhesive layer provided on one of the opposite sides of the tape has a higher adhesive strength and an adhesive layer provided on the other side has a lower adhesive strength for easy separation, and a design such that an adhesive layer provided on a side of the tape likely to be influenced by a plasticizer has a greater thickness for prevention of deterioration of the adhesive.

In the adhesive tape of the present disclosure, the adhesive layers are preferably provided on the substrate for easy handling of the adhesive tape or the like. The substrate may be a conventionally known substrate without particular limitation. Examples of the substrate include rayon fabrics, cotton fabrics, polyester fabrics, fabrics of rayon/polyester blended yarns, nonwoven fabrics, flat yarn cloths, and laminate films including a flat yarn cloth laminated with a plastic film. Of these, the flat yarn cloth-containing substrates are preferred because of their high longitudinal tensile strength.

The flat yarn cloths are woven fabrics each produced by weaving so-called flat yarns prepared by cutting a polyethylene or polypropylene film into strips and stretching the strips to impart the yarns with strength. Warp flat yarns and weft flat yarns of such a woven fabric to be used are fusion-bonded at intersections thereof for prevention of misalignment thereof.

A substrate reinforced with fibers that are not woven like the flat yarn cloth has a very low tensile strength as compared with the woven cloth. For compensation for the low tensile strength, the substrate reinforced with the fibers may be laminated with a biaxially stretched polyester film or a biaxially stretched polypropylene film with the use of an adhesive. This improves the tensile strength of the substrate, but makes it difficult to tear the substrate transversely of the substrate. In addition, the weight of the substrate tends to increase with the need for the adhesive for bonding the warp yarns to the weft yarns.

The total weight of the substrate and the adhesive layers of the adhesive tape of the present disclosure is preferably not greater than 300 $g/m^2$, particularly preferably not greater than 250 $g/m^2$, more preferably not greater than 225 $g/m^2$, especially preferably not greater than 200 $g/m^2$, per unit area of the adhesive tape.

The lower limit of the total weight is typically 50 $g/m^2$.

Of the flat yarn cloth-containing substrates, the substrates including the flat yarn cloth laminated with the plastic film are preferably used for stable adhesive strength and releasability.

This is supposedly because the substrate prevents the adhesive present on one of opposite sides of the plastic film from passing through the substrate to be mixed with the adhesive present on the other side of the plastic film, and substantially prevents additives (e.g., the crosslinking agent (C), the flame retarder, the plasticizer and the like) from migrating from the adhesive layer present on the one side to the adhesive layer present on the other side. In addition, the hand tearability of the adhesive tape and the linearity of a torn section of the adhesive tape are improved by laminating the flat yarn cloth with the plastic film probably because a breakage point is smoothly propagated.

The substrate including the flat yarn cloth laminated with the plastic film is preferably lightweight and, therefore, the plastic film preferably has a smaller thickness. More specifically, the thickness of the plastic film is preferably 10 to 80 μm.

The flat yarn cloth may be laminated with the plastic film only on the one side thereof or on the opposite sides thereof. An extrusion-laminating method is preferred for laminating the flat yarn cloth with the film because weight reduction is possible without the use of an adhesive.

The flat yarn cloth-containing substrate preferably has a thickness of 10 to 200 μm, particularly preferably 50 to 170 μm, more preferably 60 to 140 μm.

If the thickness of the substrate is excessively small, the double-sided adhesive tape will be improved in hand tearability, but tends to suffer from wrinkling and other defects in the production thereof. If the thickness of the substrate is excessively great, the defects will be suppressed in the production of the double-sided adhesive tape, but the tape tends to be poorer in hand tearability because a greater force is required for cutting the adhesive tape.

The adhesive tape of the present disclosure preferably has a thickness of 15 to 320 μm, particularly preferably 30 to 300 μm, more preferably 40 to 280 μm.

If the thickness of the adhesive tape is excessively great, the adhesive tape tends to have an unnecessarily great weight. If the thickness of the adhesive tape is excessively small, the adhesive tape will fail to have sufficient adhesion.

The ratio of the total thickness of the adhesive layers to the thickness of the substrate of the adhesive tape (adhesive layers/substrate) is preferably 0.1 to 50, particularly preferably 0.2 to 25, more preferably 0.5 to 15.

If the thickness ratio is excessively small, the adhesive layers tend to be excessively thin as compared with the substrate, making it impossible to provide a sufficient adhesive strength. If the thickness ratio is excessively great, the adhesive layers tend to be excessively thick as compared with the substrate, making it difficult to produce the adhesive tape due to the foaming of the adhesive layers, or increasing the costs. The adhesive layers provided on the opposite sides of the substrate may have different thicknesses to be thereby imparted with different adhesive strengths.

For the production of the adhesive tape, a commonly known adhesive tape production method may be used. For example, the adhesive tape may be produced by applying the adhesive on one surface of the substrate, drying the applied adhesive, and superposing a release liner on a surface of the resulting adhesive layer, or by applying the adhesive on one surface of a release liner, drying the applied adhesive, and superposing a hand-tearable substrate on a surface of the resulting adhesive layer.

Where the adhesive layer is provided on the hand-tearable substrate, the surface of the hand-tearable substrate may be subjected to a commonly known surface treatment, e.g., a physical treatment such as a corona discharge treatment or a plasma treatment, or a chemical treatment such as a priming treatment, as required.

Examples of the substrate include: plastic films made of plastics such as polyolefin resins (e.g., polyethylene), polyester resins (e.g., polyethylene terephthalate), vinyl acetate resins, polyimide resins, fluororesins, and cellophane; paper such as Kraft paper and Japanese paper; rubber sheets such as made of natural rubber and butyl rubber; foam sheets such as obtained by foaming polyurethanes and polychloroprene rubber; metal foils such as aluminum foils and copper foils; and composite materials prepared from any of these materials. These substrates may be each subjected to the surface treatment such as corona treatment, which is performed on one or both of the surfaces of the substrate.

Examples of the release liner include: laminated paper sheets prepared by laminating high-quality paper, glassine paper, Kraft paper or clay-coated paper with a film of polyethylene or the like; paper sheets coated with a resin such as polyvinyl alcohol or an acrylic acid ester copolymer; and synthetic resin films such as polyester films and polypropylene films coated with a release agent such as a fluororesin or a silicone resin.

Of these release liners, the paper release liners are preferred because of their easy hand tearability. Paper release liners having a paper weight of 40 to 120 $g/m^2$ (preferably 50 to 80 $g/m^2$) are particularly preferred. Further, such a release liner preferably has a thickness of 40 to 180 $\mu$m, particularly preferably 60 to 140 $\mu$m, more preferably 80 to 120 $\mu$m. If the thickness of the release liner is excessively small, the release liner is liable to be wrinkled during the winding thereof, making the production thereof difficult. If the thickness of the release liner is excessively great, the adhesive tape tends to be poorer in hand tearability.

Where release liners are respectively provided on the adhesive layers present on the opposite sides of the double-sided adhesive tape, the release liners are preferably selected so as to differ in peel strength for improvement of working efficiency. For example, the release liners are selected so that a release liner present on a side of the double-sided adhesive tape to be first attached to an adherend has a lower peel strength than a release liner present on a side of the double-sided adhesive tape to be next attached to another adherend. Thus, the working efficiency is improved.

A common application device may be used for applying the adhesive composition onto various sheet substrates. Examples of the application device include knife-on-roll coater, die coater, roll coater, bar coater, gravure roll coater, reverse roll coater, dipping device, and blade coater.

Conditions for the drying may be such that a solvent and residual monomers present in the adhesive can be dried off and, where the crosslinking agent (C) is used, the functional groups of the base resin can react with the crosslinking agent (C) to form a crosslinked structure. For example, the drying conditions preferably include a drying temperature of 60°C to 120°C and a drying period of about 1 to about 5 minutes. After the drying, the crosslinking reaction may be allowed to further proceed by keeping the adhesive layers between sheet substrates to maturity.

The adhesive tape of the present disclosure may be in a roll form or in a sheet form, or may be processed into other various shapes.

Where the adhesive tape is the double-sided adhesive tape of the sheet form, it is preferred to respectively provide release liners on both surfaces of the two adhesive layers. Where the adhesive tape is the double-sided adhesive tape of the roll form, it is preferred to provide a release liner on a surface of only one of the two adhesive layers.

Further, the adhesive tape of the present disclosure preferably has a greater tensile strength. The adhesive tape is required to have a strength such that it is not torn when being stretched to be applied to a floor or a wall without distortion, when being peeled off to be redone, or when being stretched to be peeled off after use. The adhesive tape preferably has a tensile strength of not less than 20 N/25 mm, particularly preferably not less than 30 N/25 mm, more preferably not less than 50 N/25 mm. The upper limit of the tensile strength is typically 250 N/25 mm. In order to provide a double-sided adhesive tape having a greater tensile strength, the tearable film to be used as the substrate film per se should have a tensile strength that is equal to or greater than the intended tensile strength of the adhesive tape.

The adherend to which the adhesive tape of the present disclosure is applied is not particularly limited. Examples of the adherend include carpets, vinyl chloride resin sheets (hereinafter sometimes referred to simply as "vinyl chloride sheets"), flooring materials, and wall materials. Particularly, the carpets, the vinyl chloride sheets, and the flooring materials are preferred.

Examples of the carpets include commonly known carpets. Specific examples of the carpets include carpets of nylon fibers and olefin fibers.

Examples of the vinyl chloride sheets include hard vinyl chloride sheets containing a relatively small amount of a plasticizer (softener), and soft vinyl chloride sheets containing a relatively large amount of a plasticizer (softener).

Examples of the flooring materials include metal alloys such as aluminum alloys and titanium alloys, composite materials containing an epoxy resin reinforced with glass fibers, and composite materials containing a phenol resin reinforced with glass fibers.

Preferred examples of a combination of aircraft parts to be bonded to each other with the use of the tape include a combination of a flooring material and a carpet, and a combination of a flooring material and a vinyl chloride sheet.

Where the adhesive tape is used for bonding and fixing carpet to flooring material or for bonding and fixing vinyl chloride sheet to flooring material, it is preferred that, in replacement of the carpet or the vinyl chloride sheet, an adhesive surface of the tape attached to the carpet or the vinyl chloride sheet is not separated from the carpet or the vinyl chloride sheet, and an adhesive surface of the tape attached to the floor can be separated from the floor without leaving an adhesive residue on the floor. It is important that the adhesive tape has a strength such that, even if the adhesive surface attached to the carpet or the vinyl chloride sheet is separated from the carpet or the vinyl chloride sheet and the adhesive tape remains on the floor in the replacement of the carpet or the vinyl chloride sheet, the adhesive surface attached to the floor can be separated from the floor without leaving adhesive residue on the floor, and such that the adhesive tape is not torn when the adhesive tape is peeled off from the floor.

Where the adhesive tape is use for the aforementioned purpose, therefore, the adhesive present on the side of the adhesive tape to be attached to the carpet or the vinyl chloride sheet preferably has a very high adhesive strength, and the adhesive present on the side of the adhesive tape to be attached to the floor preferably has an adhesive strength of about 3 to about 10 N/25 mm, so that the adhesive tape can moderately adhere to the floor surface and can be peeled off without leaving adhesive residue on the floor surface in the replacement of the carpet or the vinyl chloride sheet.

Specifically, where the adhesive tape is the double-sided adhesive tape having the layered structure including the adhesive layer (I), the substrate, and the adhesive layer (II) stacked in this order (i.e., an adhesive layer (I)/substrate/adhesive layer (II) layered structure), the adhesive layer (II) has an adhesive strength W that is controlled to a lower level in a range of 2 to 20 N/25 mm, and the adhesive layer (I) has an adhesive strength S that is controlled so that the ratio (S/W) of the adhesive strength S of the adhesive layer (I) to the adhesive strength W of the adhesive layer (II) is typically not less than 1.5, preferably not less than 2.5, particularly preferably not less than 5.0.

In the double-sided adhesive tape having the layered structure including the adhesive layer (I), the substrate, and the adhesive layer (II) stacked in this order, the adhesive layers provided on the opposite sides preferably have different formulations so as to be imparted with different adhesive strengths. Exemplary methods for imparting the adhesive layers provided on the opposite sides with different adhesive strengths include a method in which the adhesive layers provided on the opposite sides are allowed to have different thicknesses, and a method in which the adhesive layers provided on the opposite sides are allowed to have different gel fractions. For the different gel fractions, specifically, acrylic resins having different structures and different molecular weights may be used as the acrylic resin (A), or different types of crosslinking agents may be used in different amounts as the crosslinking agent (C). Further, a tackifier may be added as an additive, and the type and the amount of the tackifier may be properly controlled.

An effective method for increasing the adhesive strength (of the adhesive layer (I)) is to increase the thickness of the adhesive layer (I). More specifically, the thickness of the adhesive layer (I) is preferably 30 to 200 $\mu$m, particularly preferably 40 to 150 $\mu$m, more preferably 50 to 130 $\mu$m. Another effective method is to reduce the amount of the crosslinking agent to reduce the gel fraction. Where the crosslinking agent (C) is an isocyanate crosslinking agent, the amount of the isocyanate crosslinking agent is preferably 0.1 to 1 part by weight, particularly preferably 0.2 to 0.5 parts by weight, based on 100 parts by weight of the acrylic resin (A). Where the crosslinking agent (C) is an epoxy crosslinking agent, the amount of the epoxy crosslinking agent is preferably 0.01 to 0.1 part by weight, particularly preferably 0.01 to 0.05 parts by weight, based on 100 parts by weight of the acrylic resin (A). The epoxy crosslinking agent is preferably used as the crosslinking agent (C) for the adhesive layer (I) having a higher adhesive strength, because the resulting adhesive layer is flexible and yet has a long-lasting holding force. Thus, the flexible adhesive layer intrudes into inter-fiber interstices of a back surface of the carpet to provide an anchoring effect, thereby improving the adhesive strength. The adhesive layer (I) preferably has a gel fraction of 1 to 60 wt.%, particularly preferably 2 to 50 wt.%, more preferably 2.5 to 40 wt.%.

The adhesive strength is influenced by the molecular weight and the structure of the acrylic resin (A) and the tackifier to be added, which are less influential than the gel fraction and the amount of the crosslinking agent. The acrylic resin (A) for the adhesive layer (I) having a higher adhesive strength preferably has a weight-average molecular weight of 300,000 to 1,000,000, particularly preferably 500,000 to 800,000. The aforementioned methods are preferably used in combination to improve the adhesive strength without imbalance between the adhesive strength and other physical properties.

Conversely, an effective method for reducing the adhesive strength (of the adhesive layer (II)) is to reduce the thickness of the adhesive layer (II). More specifically, the thickness of the adhesive layer (II) is preferably 5 to 50 $\mu$m, particularly preferably 10 to 45 $\mu$m, more preferably 15 to 40 $\mu$m. Another effective method is to increase the amount of the crosslinking agent to increase the gel fraction. Where the crosslinking agent (C) is an isocyanate crosslinking agent, the amount of the isocyanate crosslinking agent to be used is preferably 1 to 10 parts by weight, particularly preferably 1.5 to 5 parts by weight, based on 100 parts by weight of the acrylic resin (A). Where the crosslinking agent (C) is an epoxy crosslinking agent, the amount of the epoxy crosslinking agent to be used is preferably 0.1 to 1 part by weight, particularly preferably 0.2 to 0.5 parts by weight, based on 100 parts by weight of the acrylic resin (A). The isocyanate crosslinking agent is preferably used as the crosslinking agent (C) for the adhesive layer (II) having a lower adhesive strength, because the resulting adhesive layer has stable releasability. The adhesive layer (II) preferably has a gel fraction of 50 to 90 wt.%, particularly preferably 55 to 90 wt.%, more preferably 60 to 85 wt.%.

The weight-average molecular weight of the acrylic resin (A) for the adhesive layer (II) having a lower adhesive strength is preferably 500,000 to 1,500,000, particularly preferably 600,000 to 1,000,000, and is preferably equal to or greater than that of the acrylic resin (A) for the adhesive layer (I) having a higher adhesive strength.

As described above, the present disclosure is applicable to the double-sided adhesive tape having a higher adhesive strength on one of opposite sides thereof and a lower adhesive strength on the other side thereof for re-releasability not by way of limitation. The present disclosure may be applied to a double-sided adhesive tape having higher adhesive strengths on both sides thereof.

The adhesive tape of the present disclosure, which is thus provided, is free from degradation of adhesion, which may otherwise occur when a plasticizer or a like formulation ingredient migrates from an adherend or a base such as made of a vinyl chloride resin to the adhesive layer over time, and has excellent adhesion even under high-temperature and high-humidity conditions. Where the hand-tearable substrate is used as the substrate film, the adhesive tape can be easily cut in the tape transverse direction at any desired position by hand without the use of a tape cutter or the like. The adhesive tape is particularly useful for fixing a carpet or a vinyl chloride sheet to a flooring material.

EXAMPLES

The embodiments of the present disclosure will be described more specifically by way of examples thereof. It should be understood that the present disclosure is not limited to these examples within the scope of the present disclosure. In the following examples, "parts" and "%" are based on weight.

First, acrylic resins and polyester resins were prepared in the following manner. The weight-average molecular weight, the dispersity ratio, and the glass transition temperature of each of the acrylic resins, and the number-average molecular weight and the glass transition temperature of each of the polyester resins were measured by the methods described above.

The viscosity was measured in conformity with "4.5.3 Rotational Viscometer Method" of JIS K5400(1990).

[Production Example 1]

<Preparation of Acrylic Resin (A-1)>

First, 32.6 parts of 2-ethylhexyl acrylate, 54.4 parts of butyl acrylate, 7 parts of methyl acrylate, 6 parts of acrylic acid, 70 parts of ethyl acetate, and 0.05 parts of azobisisobutyronitrile (as a polymerization initiator) were fed into a reaction vessel provided with a thermometer, a stirrer, and a reflux cooler. While the resulting mixture was heated with stirring, polymerization was allowed to proceed at an ethyl acetate reflux temperature for 5.5 hours. Then, the resulting reaction mixture was diluted with ethyl acetate. Thus, a 45% solution of an acrylic resin (A-1) was prepared.

The acrylic resin (A-1) thus prepared had a weight-average molecular weight of 640,000, a dispersity ratio of 5.2, a viscosity of 10,000 mPa·s/25°C, and a glass transition temperature of -52°C.

[Production Example 2]

<Preparation of Acrylic Resin (A-2)>

First, 93.8 parts of 2-ethylhexyl acrylate, 3 parts of vinyl acetate, 0.2 parts of 2-hydroxyethyl methacrylate, 3 parts of acrylic acid, 37 parts of ethyl acetate, 14.6 parts of acetone, and 0.15 parts of azobisisobutyronitrile (as a polymerization initiator) were fed into a reaction vessel provided with a thermometer, a stirrer, and a reflux cooler. While the resulting mixture was heated with stirring, polymerization was allowed to proceed at an ethyl acetate reflux temperature for 7 hours. Then, the resulting reaction mixture was diluted with toluene. Thus, a 40% solution of an acrylic resin (A-2) was prepared.

The acrylic resin (A-2) thus prepared had a weight-average molecular weight of 600, 000, a dispersity ratio of 4. 7, a viscosity of 6, 000 mPa·s/25°C, and a glass transition temperature of -65°C.

[Production Example 3]

<Preparation of Polyester Resin (B-1)>

First, 9.6 parts of isophthalic acid, 23.3 parts of sebacic acid, and 21.7 parts of azelaic acid (as a polycarboxylic acid component (B1)), 1.8 parts of ethylene glycol and 43.6 parts of cyclohexanedimethanol (as a polyol component (B2)), and 0.04 parts of germanium dioxide (as a catalyst) were fed into a reaction can provided with a thermometer, a stirrer, a fractionating tower, a nitrogen introduction tube, and a vacuum system. The internal temperature was gradually increased to 250°C, and an esterification reaction was allowed to proceed for 4 hours. Thereafter, the internal temperature was increased to 270°C, and the internal pressure was reduced to 1.33 hPa, and a polycondensation reaction was allowed to proceed for 4 hours. Thus, a polyester resin (B-1) was produced. The polyester resin (B-1) thus produced had a number-average molecular weight of 30,000 and a glass transition temperature of -25°C.

The polyester resin (B-1) produced in the aforementioned manner was diluted with ethyl acetate, whereby a 45% ethyl acetate solution of the polyester resin (B-1) was prepared.

[Production Example 4]

<Preparation of Polyester Resin (B-2)>

First, 9.6 parts of isophthalic acid and 46.8 parts of sebacic acid (as a polycarboxylic acid component (B1)), 27.1 parts of neopentyl glycol, 13 parts of 1,4-butanediol, 3 parts of 1,6-hexanediol, and 0.5 parts of trimethylolpropane (as a polyol component (B2)), and 0.01 part of tetrabutyl titanate (as a catalyst) were fed into a reaction can provided with a thermometer, a stirrer, a fractionating tower, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate (catalyst) was fed into the reaction can. Then, the internal pressure was reduced to 1.33 hPa, and a polycondensation reaction was allowed to proceed for 3 hours. Thus, a polyester resin (B-2) was produced. The polyester resin (B-2) thus produced had a number-average molecular weight of 25, 000 and a glass transition temperature of -50°C.

The polyester resin (B-2) produced in the aforementioned manner was diluted with ethyl acetate to a solid concentration of 50%. Then, 2 parts of a hydrolysis inhibitor (carbodiimide group-containing hydrolysis inhibitor available under the trade name of CARBODILITE V-07 from Nisshinbo Chemical Inc.) was added to and mixed with 100 parts (on a solid basis) of the resulting solution of the polyester resin (B-2) with stirring. Thus, a 50% ethyl acetate solution of the polyester resin (B-2) was prepared.

[Production Example 5]

<Preparation of Polyester Resin (B-3)>

First, 21 parts of terephthalic acid, 16.6 parts of isophthalic acid, and 23 parts of adipic acid (as a polycarboxylic acid component (B1)), 18.4 parts of ethylene glycol and 21 parts of neopentyl glycol (as a polyol component (B2)), and 0.02 parts of germanium dioxide (as a catalyst) were fed into a reaction can provided with a thermometer, a stirrer, a fractionating tower, a nitrogen introduction tube, and a vacuum system. The internal temperature was gradually increased to 250°C, and an esterification reaction was allowed to proceed for 4 hours. Thereafter, the internal temperature was increased to 270°C, and the internal pressure was reduced to 1.33 hPa, and a polycondensation reaction was allowed to proceed for 3 hours. Thus, a polyester resin (B-3) was produced. The polyester resin (B-3) thus produced had a number-average molecular weight of 27,000 and a glass transition temperature of 10°C.

The polyester resin (B-3) produced in the aforementioned manner was diluted with ethyl acetate, whereby a 50% ethyl acetate solution of the polyester resin (B-3) was prepared.

[Production Example 6]

<Preparation of Polyester Resin (B'-1)>

First, 276.2 parts of terephthalic acid, 59.2 parts of isophthalic acid and 52.1 parts of adipic acid (as a polycarboxylic acid component (B1)), 100.7 parts of 1,4-butanediol, 168.4 parts of 1,6-hexanediol, and 137 parts of cyclohexanedimethanol (as a polyol component (B2)), and 0.20 parts of tetrabutyl titanate (as a catalyst) were fed into a reaction can provided with a thermometer, a stirrer, a fractionating tower, a nitrogen introduction tube, and a vacuum system. The internal temperature was gradually increased to 240°C, and an esterification reaction was allowed to proceed for 4 hours. Thereafter, the internal temperature was increased to 260°C, and 0.20 parts of tetrabutyl titanate (catalyst) was fed into the reaction can. Then, the internal pressure was reduced to 1 hPa, and a polycondensation reaction was allowed to proceed for 3 hours. Thus, a crystalline polyester resin ($\alpha$) was produced.

On the other hand, 176.6 parts of terephthalic acid and 156.6 parts of isophthalic acid (as a polycarboxylic acid component (B1)), 97.1 parts of ethylene glycol and 361.3 parts of a bisphenol-A ethylene oxide adduct (as a polyol component (B2)), and 0.2 parts of tetrabutyl titanate (as a catalyst) were fed into a reaction can provided with a thermometer, a stirrer, a fractionating tower, a nitrogen introduction tube, and a vacuum system. The internal temperature was gradually increased to 240°C, and an esterification reaction was allowed to proceed for 4 hours. Thereafter, the internal temperature was increased to 260°C, and 0.2 parts of tetrabutyl titanate (catalyst) was fed into the reaction can. Then, the internal pressure was reduced to 1 hPa, and a polycondensation reaction was allowed to proceed for 3 hours. Further, the internal temperature was reduced to 240°C, and 8.3 parts of isophthalic acid was added, and depolymerization was allowed to proceed for 1 hour. Thus, an amorphous polyester resin ($\beta$) was produced.

Then, 180 parts of the crystalline polyester resin ($\alpha$) and 120 parts of the amorphous polyester resin ($\beta$) produced in the aforementioned manner, 560 parts of toluene, and 140 parts of methyl ethyl ketone were fed into a reaction can provided with a thermometer, a stirrer, a fractionating tower, and a nitrogen introduction tube. The resins were dissolved in the solvent at 80°C in 5 hours. Thus, a 23% ethyl acetate solution of a polyester resin (B'-1) was prepared. The polyester resin (B'-1) thus prepared had a glass transition temperature of 105°C.

<Polyester Resin (B'-2)>

A polyester resin having a glass transition temperature of 40°C and a number-average molecular weight of 3,000 and commercially available under NICHIGO POLYESTER TP-219 from Nippon Synthetic Chemical Industry Co., Ltd. was used as a polyester resin (B'-2).

<Polyester Resin (B'-3)>

A polyester resin having a glass transition temperature of 40°C and a number-average molecular weight of 7,000 and commercially available under NICHIGO POLYESTER WR-961 from Nippon Synthetic Chemical Industry Co., Ltd. was used as a polyester resin (B'-3).

<Polyester Resin (B'-4)>

A polyester resin having a glass transition temperature of -56°C and a number-average molecular weight of 3,000 and commercially available under ADEKASIZER PN-350 from ADEKA Corporation was used as a polyester resin (B'-4).

[Example 1]

(Production of Substrate-based Double-Sided Adhesive Tape)

Proper amounts of ethyl acetate and methyl ethyl ketone, and 1.5 parts of an isocyanate crosslinking agent (available under the trade name of CORONATE L-55E from Nippon Polyurethane Industry Co., Ltd.) were added to 90 parts (on a solid basis) of the acrylic resin (A-1) prepared in Production Example 1 and 10 parts (on a solid basis) of the polyester resin (B-1) prepared in Production Example 3 (a total solid proportion of 100 parts), and these ingredients were mixed to uniformity. The resulting mixture was applied onto a lower peel strength surface of a paper release liner (available under the trade name of SLB-50KWD from Sumika-kakoushi Co., Ltd. and having a base paper weight of 53 g/m$^2$) to a post-application thickness of 50 $\mu$m by means of an applicator, and dried at 80°C for 3 minutes. Thus, a paper release liner (1-1) formed with an adhesive layer (I) was produced.

Subsequently, 2.0 parts of an isocyanate crosslinking agent (available under the trade name of CORONATE L-55E from Nippon Polyurethane Industry Co., Ltd.) and a proper amount of ethyl acetate were added to 100 parts (on a solid basis) of the acrylic resin (A-2) prepared in Production Example 2, and these ingredients were mixed to uniformity. The resulting mixture was applied onto a lower peel strength surface of a paper release liner (available under the trade name of SLB-50KWD from Sumika-kakoushi Co., Ltd. and having a base paper weight of 53 g/m$^2$) to a post-application thickness of 35 $\mu$m by means of an applicator, and dried at 80°C for 2 minutes. Thus, a paper release liner (1-2) formed with an adhesive layer (II) was produced.

Then, an adhesive surface of the paper release liner (1-1) formed with the adhesive layer (I) was bonded to a surface (corona-treated surface) of a laminate substrate including a polyethylene flat yarn cloth and polyethylene films provided on opposite sides of the polyethylene flat yarn cloth (available from Diatex Co., Ltd. and having a weight of 47 g/m$^2$ and a thickness of 62 $\mu$m) as a flat yarn cloth-containing substrate, and then an adhesive surface of the paper release liner (1-2) formed with the adhesive layer (II) was bonded to the other surface (corona-treated surface) of the substrate. Thereafter, the resulting product was thermally aged in a 40°C drier for 3 days. Thus, a substrate-based double-sided adhesive tape was produced.

(Production of Substrateless Adhesive Tape)

Proper amounts of ethyl acetate and methyl ethyl ketone, and 1.5 parts of an isocyanate crosslinking agent (available under the trade name of CORONATE L-55E from Nippon Polyurethane Industry Co., Ltd.) were added to 90 parts (on a solid basis) of the acrylic resin (A-1) prepared in Production Example 1 and 10 parts (on a solid basis) of the polyester resin (B-1) prepared in Production Example 3 (a total solid proportion of 100 parts), and these ingredients were mixed to uniformity. The resulting mixture was applied onto a lower peel strength surface of a paper release liner (available under the trade name of SLB-50KWD from Sumika-kakoushi Co., Ltd. and having a base paper weight of 53 g/m$^2$) to a post-application thickness of 50 $\mu$m by means of an applicator, and dried at 80°C for 3 minutes. Thus, a paper release liner (1-1) formed with an adhesive layer (I) was produced.

Further, an adhesive surface of the paper release liner (1-1) formed with the adhesive layer (I) was bonded to a silicone-coated surface of a film release liner (of medium-high peel strength type available under the trade name of SEPARATOR SP-PET PET-03-BU from Mitsui Chemical Tohcello, Inc.) Thereafter, the resulting product was thermally aged in a 40°C drier for 3 days. Thus, a transfer (substrateless) adhesive tape was produced.

[Example 2]

A substrate-based double-sided adhesive tape and a substrateless adhesive tape were produced in substantially the same manner as in Example 1, except that the polyester resin (B-2) prepared in Production Example 4 was used instead of the polyester resin (B-1).

[Example 3]

A substrate-based double-sided adhesive tape and a substrateless adhesive tape were produced in substantially the same manner as in Example 1, except that the polyester resin (B-3) prepared in Production Example 5 was used instead of the polyester resin (B-1).

[Example 4]

A substrate-based double-sided adhesive tape and a substrateless adhesive tape were produced in substantially the same manner as in Example 1, except that the proportion of the acrylic resin (A-1) was changed to 80 parts and the proportion of the polyester resin (B-1) was changed to 20 parts.

[Comparative Example 1]

A substrate-based double-sided adhesive tape and a substrateless adhesive tape were produced in substantially the same manner as in Example 1, except that the polyester resin (B'-1) prepared in Production Example 6 was used instead of the polyester resin (B-1).

[Comparative Example 2]

A substrate-based double-sided adhesive tape and a substrateless adhesive tape were produced in substantially the same manner as in Example 1, except that the proportion of the acrylic resin (A-1) was changed to 100 parts and the polyester resin (B-1) was not added.

[Comparative Example 3]

A substrate-based double-sided adhesive tape and a substrateless adhesive tape were produced in substantially the same manner as in Example 1, except that the proportion of the polyester resin (B-1) was changed to 100 parts and the acrylic resin (A-1) was not added.

[Comparative Example 4]

A substrate-based double-sided adhesive tape and a substrateless adhesive tape were produced in substantially the same manner as in Example 1, except that the polyester resin (B'-2) was used instead of the polyester resin (B-1).

[Comparative Example 5]

A substrate-based double-sided adhesive tape and a substrateless adhesive tape were produced in substantially the same manner as in Example 1, except that the polyester resin (B'-3) was used instead of the polyester resin (B-1).

[Comparative Example 6]

A substrate-based double-sided adhesive tape and a substrateless adhesive tape were produced in substantially the same manner as in Example 1, except that the polyester resin (B'-4) was used instead of the polyester resin (B-1).

Measurement was performed in the following manner on the substrate-based double-sided adhesive tapes or the transfer (substrateless) adhesive tapes thus produced, which were each evaluated for an adhesive strength (I) to PVC (polyvinyl chloride), an adhesive strength (II) to PVC, and an adhesive strength (III) to SUS-BA plate.

<Adhesive Strength (I) to PVC>

The back side of the adhesive layer (I) of the substrate-based double-sided adhesive tape to be subjected to measurement of the adhesive strength (adhesive layer (II)) was lined with a 25-μm thick polyester film (LUMIRROR S10 available from Toray Industries, Inc.) after the release liner was removed from the adhesive layer (II). A test strip was prepared by cutting the resulting laminate into a size of 25 mm (width) × 150 mm (length) . Then, a corona-treated surface of a 38-μm thick polyethylene terephthalate film (LUMIRROR S10 available from Toray Industries, Inc.) cut into a size of 25 mm (width) × 180 mm (length) was bonded to the test strip with a portion thereof overlapping about 3 cm with one end portion of the adhesive layer of the test strip, and the overlapping portions were fixed to each other by means of a stapler.

Subsequently, a soft vinyl chloride sheet (TAKISTLON QA-983 available from Takiron Corporation) was used as an adherend. After the release liner was removed from the test strip to expose the adhesive layer (I), the adhesive layer (I) of the test strip was press-bonded to a back surface (black surface) of the soft vinyl chloride sheet by moving a 2 kg roller at a pressing speed of 10 mm/s back and forth twice on the soft vinyl chloride sheet in a constant-temperature and constant-humidity apparatus controlled at 23 ± 2°C and 50 ± 5 %RH. After the press-bonding, the resulting test strip was allowed to stand in the constant-temperature and constant-humidity apparatus controlled at 23 ± 2°C and 50 ± 5 %RH: (1) for 5 minutes; and (2) for 3 days. After a 10-mm long free portion of the test strip was folded back 90 degrees and peeled off, the sheet was fixed to a bottom of a tensile tester (AG-X+ available from Shimadzu Corporation), and the end portion of the test strip was fixed to an upper chuck. The adhesive strength was measured by peeling off the double-sided adhesive tape at a speed of 100 mm/minute in a 90-degree direction from the adherend.

Further, the test strip was allowed to stand in a constant-temperature and constant-humidity apparatus controlled at 70 ± 2°C and 90 ± 5 %RH for 14 days (336 hours) after being press-bonded to the adherend in the aforementioned manner, and taken out and allowed to stand in a constant-temperature and constant-humidity apparatus controlled at 23 ± 2°C and 50 ± 5 %RH for 2 hours or longer. After this moist heat test, the adhesive strength was measured by peeling off the double-sided adhesive tape from the adherend in the aforementioned manner.

(Evaluation Criteria)

○: Not less than 9 N/25 mm after 5 minutes from the bonding, and not less than 4 N/25 mm after the moist heat test.

×: Less than 9 N/25 mm after 5 minutes from the bonding, and less than 4 N/25 mm after the moist heat test.

<Adhesive Strength (II) to PVC>

A test strip was prepared by cutting the transfer (substrateless) adhesive tape into a size of 25 mm (width) × 160 mm (length).

Then, a soft vinyl chloride sheet (TAKISTLON QA-983 available from Takiron Corporation) was used as an adherend. After the paper release liner was removed from the test strip, the test strip was press-bonded to a back surface (black surface) of the sheet cut into a size of 25 mm (width) × 200 mm (length) by moving a 2 kg roller at a pressing speed of 10 mm/s back and forth twice on the sheet in a constant-temperature and constant-humidity apparatus controlled at 23 ± 2°C and 50 ± 5 %RH.

Subsequently, the film release liner was removed from the test strip, and the test strip was press-bonded to a back surface (black surface) of the sheet cut into a size of 25 mm (width) × 200 mm (length) by moving a 2 kg roller at a pressing speed of 10 mm/s back and forth twice on the sheet in the aforementioned manner.

After the press-bonding, the resulting test strip was allowed to stand in a constant-temperature and constant-humidity apparatus controlled at 23 ± 2°C and 50 ± 5 %RH: (1) for 5 minutes; and (2) for 3 days. After free portions (end portions) of the sheets were folded back 90 degrees upward and downward, respectively, and spread in a 180-degree direction, one of the sheets was fixed to a lower chuck of a tensile tester (AG-X+ available from Shimadzu Corporation), and the end portion of the other sheet was fixed to an upper chuck. Then, the adhesive strength was measured by separating the two sheets from each other at a speed of 300 mm/minute.

Further, the test strip was allowed to stand in a constant-temperature and constant-humidity apparatus controlled at 70 ± 2°C and 90 ± 5 %RH for 14 days (336 hours) after being press-bonded to the sheets in the aforementioned manner, and taken out and allowed to stand in a constant-temperature and constant-humidity apparatus controlled at 23 ± 2°C and 50 ± 5 %RH for 2 hours or longer. After this moist heat test, the adhesive strength was measured by separating the two sheets from each other in the aforementioned manner.

(Evaluation Criteria)

○: Not less than 5 N/25 mm after 5 minutes from the bonding, and not less than 2.5 N/25 mm after the moist heat test.

×: Less than 5 N/25 mm after 5 minutes from the bonding, and less than 2.5 N/25 mm after the moist heat test.

<Adhesive Strength (III) to SUS-BA Plate>

The back side of the adhesive layer (I) of the double-sided adhesive tape to be subjected to measurement of adhesive strength (adhesive layer (II)) was lined with a 25-μm thick polyester film (LUMIRROR S10 available from Toray Industries, Inc.) after a release liner was removed from the adhesive layer (II). A test strip was prepared by cutting the resulting laminate into a size of 25 mm (width) × 150 mm (length) . Then, a corona-treated surface of a 38-μm thick polyethylene terephthalate film (LUMIRROR S10 available from Toray Industries, Inc.) cut into a size of 25 mm (width) × 180 mm (length) was bonded to the test strip with a portion thereof overlapping about 3 cm with one end portion of the adhesive layer of the test strip, and the overlapping portions were fixed to each other by means of a stapler.

Subsequently, a test plate of a SUS-BA plate (bright-annealed stainless steel plate) heat-dried at 175°C for 1 hour was used as an adherend. After the release liner was removed from the test strip to expose the adhesive layer (I), the adhesive layer (I) of the test strip was press-bonded to the test plate by moving a 2 kg roller at a pressing speed of 10 mm/s back and forth twice on the test plate in a constant-temperature and constant-humidity apparatus controlled at 23 ± 2°C and 50 ± 5 %RH. After the press-bonding, the resulting test strip was allowed to stand in the constant-temperature and constant-humidity apparatus controlled at 23 ± 2°C and 50 ± 5 %RH: (1) for 5 minutes; and (2) for 3 days. After a 10-mm long free portion of the test strip was folded back 90 degrees and peeled off, the test plate was fixed to a bottom of a tensile tester (AG-X+ available from Shimadzu Corporation), and the end portion of the test strip was fixed to an upper chuck. The adhesive strength was measured by peeling off the double-sided adhesive tape at a speed of 100 mm/minute in a 90-degree direction from the adherend.

Further, the test strip was allowed to stand in a constant-temperature and constant-humidity apparatus controlled at 70 ± 2°C and 90 ± 5 %RH for 14 days (336 hours) after being press-bonded to the test plate in the aforementioned manner, and taken out and allowed to stand in a constant-temperature and constant-humidity apparatus controlled at 23 ± 2°C and 50 ± 5 %RH for 2 hours or longer. After this moist heat test, the adhesive strength was measured by peeling off the double-sided adhesive tape from the adherend in the aforementioned manner.

(Evaluation Criteria)

○: Not less than 9 N/25 mm after 5 minutes from the bonding, and not less than 40 N/25 mm after the moist heat test.

×: Less than 9 N/25 mm after 5 minutes from the bonding, and less than 40 N/25 mm after the moist heat test.

The evaluation results for Examples and Comparative Examples are shown in Table 1.

## Table 1

| | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|
| **Formulation** | | | | | | | | | | |
| **Adhesive layer (I)** | | | | | | | | | | |
| Acrylic resin (proportion) | A-1 (90) | A-1 (90) | A-1 (90) | A-1 (80) | A-1 (90) | A-1 (100) | — (0) | A-1 (90) | A-1 (90) | A-1 (90) |
| Polyester resin (proportion) | B-1 (10) | B-2 (10) | B-3 (10) | B-1 (20) | B'-1 (10) | — (0) | B-1 (100) | B'-2 (10) | B'-3 (10) | B'-4 (10) |
| Crosslinking agent (proportion) | L-55E (1.5) | L-55E (1.5) | L-55E (1.5) | L-55E (1.5) | L-55E (1.5) | L-55E (1.5) | L-55E (1.5) | L-55E (1.5) | L-55E (1.5) | L-55E (1.5) |
| Thickness ($\mu$m) | 50 | 50 | 50 | 50 | 50 | 50 | 50 | 50 | 50 | 50 |
| **Adhesive layer (II)** | | | | | | | | | | |
| Acrylic resin (proportion) | A-2 (100) | A-2 (100) | A-2 (100) | A-2 (100) | A-2 (100) | A-2 (100) | A-2 (100) | A-2 (100) | A-2 (100) | A-2 (100) |
| Polyester resin (proportion) | — (0) | — (0) | — (0) | — (0) | — (0) | — (0) | — (0) | — (0) | — (0) | — (0) |
| Crosslinking agent (proportion) | L-55E (2) | L-55E (2) | L-55E (2) | L-55E (2) | L-55E (2) | L-55E (2) | L-55E (2) | L-55E (2) | L-55E (2) | L-55E (2) |
| Thickness ($\mu$m) | 35 | 35 | 35 | 35 | 35 | 35 | 35 | 35 | 35 | 35 |
| **Substrate** | | | | | | | | | | |
| Material | Flat yarn cloth-containing substrate | | | | | | | | | |
| Weight (g/m$^2$) | 47 | | | | | | | | | |
| Thickness ($\mu$m) | 62 | | | | | | | | | |
| **Physical properties** | | | | | | | | | | |
| **Adhesive strength (I) to PVC (N/25 mm)** | | | | | | | | | | |
| Adhesion evaluation | ○ | ○ | ○ | ○ | × | × | × | × | ○ | × |
| After 5 minutes from bonding | 9.9 | 10 | 11 | 11 | 11 | 11 | 11 | 11 | 10 | 12 |
| After 3 days from bonding | 17 | 24 | 22 | 15 | 13 | 16 | 20 | 24 | 26 | 18 |
| After moist heat test | 5.1 | 4.8 | 4.2 | 5.3 | 3.4 | 3.6 | 0.7 | 3.5 | 4.5 | 2.8 |
| **Adhesion strength (II) to PVC (N/25 mm)** | | | | | | | | | | |
| Adhesion evaluation | ○ | ○ | ○ | ○ | × | × | × | ○ | ○ | ○ |
| After 5 minutes from bonding | 6.8 | 7.3 | 5.9 | 8.1 | 4.4 | 7.5 | 9.8 | 11 | 9.1 | 9.9 |
| After 3 days from bonding | 9 | 12 | 9.2 | 10 | 9.5 | 11 | 14 | 7.1 | 7.8 | 4.3 |
| After moist heat test | 3.3 | 4.1 | 3 | 3.6 | 2.1 | 2.3 | 0.2 | 4.2 | 3.5 | 3.4 |
| **Adhesive strength (III) to SUS-BA plate (N/25 mm)** | | | | | | | | | | |
| Adhesion evaluation | ○ | ○ | ○ | ○ | × | × | × | ○ | × | × |
| After 5 minutes from bonding | 11 | 11 | 9.3 | 12 | 5.3 | 14 | 8.4 | 11 | 9.9 | 17 |
| After 3 days from bonding | 31 | 40 | 23 | 31 | 13 | 34 | 41 | 20 | 13 | 39 |
| After moist heat test | 42 | 43 | 42 | 48 | 24 | 37 | 50 | 43 | 1.3 | 31 |

**EP 3 561 018 A1**

The evaluation results indicate that Examples 1 to 4 employing the adhesive compositions each prepared by blending the acrylic resin (A) and the polyester resin (B-1) to (B-3) having a Tg of not higher than 50°C and a number-average molecular weight of 10, 000 to 50, 000 are excellent in adhesion, i.e., the adhesive strength (I) to the PVC, the adhesive strength (II) to the PVC, and the adhesive strength (III) to the SUS-BA plate, after 5 minutes from the bonding, after 3 days from the bonding, and after the moist heat test. Particularly, where the adhesive composition is prepared by blending the polyester resin (B) having a lower glass transition temperature, the adhesive strengths tend to be increased.

On the other hand, Comparative Example 2 employing the adhesive composition containing the acrylic resin (A) alone is poorer in adhesion after the moist heat test, i.e., with an adhesive strength (I) of 3. 6 N/25 mm to the PVC and an adhesive strength (II) of 2.3 N/25 mm to the PVC after the moist heat test.

Further, Comparative Example 1 employing the adhesive composition prepared by blending the acrylic resin (A) and the polyester resin (B'-1) having a Tg of higher than 50°C is equivalent to or poorer than Comparative Example 2 employing the adhesive composition containing the acrylic resin (A) alone in adhesion, i.e., the adhesive strength (I) to the PVC, the adhesive strength (II) to the PVC, and the adhesive strength (III) to the SUS-BA plate, after 5 minutes from the bonding, after 3 days from the bonding, and after the moist heat test. Therefore, Comparative Example 1 fails to provide the adhesion-improving effect observed in Examples 1 to 4.

Comparative Example 3 employing the adhesive composition containing the polyester (B) alone is significantly poorer in the adhesive strengths to the PVC after the moist heat test.

Comparative Examples 4 to 6 employing the adhesive compositions each prepared by blending the acrylic resin (A) and the polyester resin (B'-2) to (B'-4) having a Tg of not higher than 50°C and a number average molecular weight falling outside the range of 10,000 to 50,000 are equivalent to or poorer than Comparative Example 2 employing the adhesive composition containing the acrylic resin (A) alone in at least one of the adhesive strength (I) to the PVC after the moist heat test and the adhesive strength (III) to the SUS-BA plate after the moist heat test. Thus, Comparative Examples 4 to 6 fail to have excellent adhesion satisfying all the requirements for the evaluation items including the adhesive strength (I) to the PVC, the adhesive strength (II) to the PVC, and the adhesive strength (III) to the SUS-BA plate. Therefore, Comparative Examples 4 to 6 fail to provide the adhesion-improving effect observed in Examples 1 to 4.

The above results indicate that the adhesive composition prepared by blending the acrylic resin (A) and the polyester resin (B) having a Tg of not higher than 50°C and a number-average molecular weight of 10,000 to 50,000 particularly improves the adhesive strength to the PVC after the moist heat test as compared with the adhesive composition containing the acrylic resin (A) alone or the adhesive composition containing the polyester resin (B) alone, and has well-balanced adhesive properties with an excellent adhesive strength to the SUS-BA plate and an excellent initial adhesive strength to the PVC.

While specific forms of the embodiments of the present disclosure have been shown in the aforementioned inventive examples, the inventive examples are merely illustrative of the disclosure but not limitative of the disclosure. It is contemplated that various modifications apparent to those skilled in the art could be made within the scope of the disclosure.

The adhesive composition of the present disclosure, and the adhesive and the adhesive tape produced by using the adhesive composition have satisfactory adhesive strength not only when being applied to a highly polar metal surface such as of a SUS-BA plate but also when being applied to a surface of PVC containing a great amount of a plasticizer, and have satisfactory adhesion even after a durability test. Therefore, the adhesive composition, the adhesive, and the adhesive tape can be advantageously used in applications for fixing a surface or a part liable to be separated due to reduction in adhesive strength over time, for example, for bonding a PVC sheet, a carpet, or the like.

**Claims**

1. An adhesive composition comprising:

   (A) an acrylic resin; and
   (B) a polyester resin having a glass transition temperature of not higher than 50°C and a number-average molecular weight of 10,000 to 50,000.

2. The adhesive composition according to claim 1, wherein a weight ratio (A/B) between the acrylic resin (A) and the polyester resin (B) is 99/1 to 70/30.

3. The adhesive composition according to claim 1 or 2, further comprising:
   (C) a crosslinking agent.

4.  An adhesive prepared by curing the adhesive composition according to any one of claims 1 to 3.

5.  An adhesive tape comprising an adhesive layer made of the adhesive according to claim 4.

6.  An adhesive tape having a layered structure comprising
    an adhesive layer (I),
    a substrate, and
    an adhesive layer (II)
    stacked in this order,
    wherein at least one of the adhesive layer (I) and the adhesive layer (II) is made of the adhesive according to claim 4.

<table>
<tr><td colspan="2" align="center">**INTERNATIONAL SEARCH REPORT**</td><td>International application No.<br>PCT/JP2017/045860</td></tr>
</table>

A. CLASSIFICATION OF SUBJECT MATTER
Int.Cl. C09J133/00(2006.01)i, C09J7/00(2018.01)i, C09J7/20(2018.01)i, C09J167/02(2006.01)i

According to International Patent Classification (IPC) or to both national classification and IPC

B. FIELDS SEARCHED

Minimum documentation searched (classification system followed by classification symbols)
Int.Cl. C09J133/00, C09J7/00, C09J7/20, C09J167/02

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/145414 A1 (SHOWA DENKO KABUSHIKI KAISHA) 24 November 2011, claims, paragraphs [0028], [0031]–[0032], [0044], examples & CN 102906208 A & JP 2011–241346 A | 1–6<br>3–6 |
| X<br>Y | JP 11–100555 A (KYODO PRINTING CO., LTD.) 13 April 1999, claims, examples (Family: none) | 1–2<br>3–6 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>01 February 2018 (01.02.2018) | Date of mailing of the international search report<br>13 February 2018 (13.02.2018) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/045860 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-138117 A (TOKUYAMA CORPORATION) 30 July 2015, paragraph [0102] (Family: none) | 1-6 |
| A | JP 2016-048746 A (SUMITOMO ELECTRIC INDUSTRIES, LTD.) 07 April 2016, example 12 (Family: none) | 1-6 |
| A | JP 2009-256609 A (LINTEC CORP.) 05 November 2009, claims, examples (Family: none) | 1-6 |
| A | JP 05-320607 A (NIPPON SHOKUBAI CO., LTD.) 03 December 1993, claims (Family: none) | 1-6 |

Form PCT/ISA/210 (continuation of second sheet) (January 2015)

**EP 3 561 018 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016164229 A